# DEMANDE DE BREVET EUROPEEN

(11) **EP 1 043 511 A1**
(43) Date de publication de la demande: **11.10.2000**
(21) Numéro de dépôt: 00400942.9
(22) Date de dépôt: 05.04.2000
(51) Int. Cl.: F16C 33/44

(54) **Procédé de fabrication de cage pour roulement**

(30) Priorité: 08.04.1999 FR 9904419
(71) Demandeur: SKF FRANCE, F-92140 Clamart (FR)
(72) Inventeur: Boutreux, Michel, 37000 Tours (FR); Tadic, Vedran, 37000 Tours (FR); Fierling, Yannick, 57410 Petit-Rederching (FR)
(74) Mandataire: Casalonga, Axel

(57) **Abrégé**

Procédé de fabrication de cage, du type destiné au maintien d'éléments roulants dans un roulement comprenant au moins une rangée d'éléments roulants disposés entre deux chemins de roulement. La dite cage comprend une partie annulaire pourvue d'alvéoles destinées à recevoir les éléments roulants, lesdits éléments roulants étant encliquetés dans les alvéoles et retenus dans ces dernières au moyen d'organes élastiquement déformables. La cage est obtenue par moulage d'un mélange d'un polymère du groupe des polyphtalamides et d'un élastomère.

## Description

L'invention concerne les cages en matière synthétique pour roulement.

Ces cages se présentent sous la forme d'un élément annulaire muni d'un certain nombre d'alvéoles destinées à recevoir les éléments roulants, des billes par exemple, et à les espacer correctement et régulièrement dans le sens circonférentiel les uns par rapport aux autres et d'éviter ainsi tout balourd lors de la rotation du roulement.

Les alvéoles sont généralement bordées, au moins sur deux côtés opposés dans le sens circonférentiel, de languettes de retenue destinées à maintenir les éléments roulants dans les alvéoles et à assurer en fonctionnement la retenue de la cage sur la rangée d'éléments roulants.

Le montage de la cage sur les éléments roulants (ou des éléments roulants dans les alvéoles de cage) se fait alors par encliquetage éléments roulants/alvéoles en utilisant la flexion des languettes de retenue.

C'est ainsi que dans le cas d'un roulement rigide à billes, les languettes de retenue prolongent les alvéoles de façon à définir une ouverture d'un diamètre légèrement inférieur à celui de la bille.

La rangée de billes est tout d'abord montée entre la bague extérieure et la bague intérieure du roulement. Les billes sont ensuite réparties circonférentiellement au moyen d'un outil approprié.

La cage est positionnée sur les billes de telle façon que chaque alvéole soit en face de chaque bille.

La cage est poussée axialement vers la rangée de billes, ce qui provoque l'ouverture des languettes de retenue qui se referment ensuite par élasticité sur les billes dès que celles-ci ont pris leur place dans les alvéoles sphériques.

La cage est ainsi radialement centrée par rapport aux bagues par les alvéoles sphériques et est retenue axialement sur ladite rangée de billes par les languettes de retenue des alvéoles.

De telles cages sont connues en soi et sont utilisées depuis de nombreuses années.

Ces cages, par rapport aux cages métalliques, présentent l'avantage d'un coût de réalisation réduit, d'une masse, et donc d'une inertie, faibles.

Les bonnes propriétés de glissement de la matière plastique avec l'acier favorisent en outre un fonctionnement avec peu de frottements et donc peu d'usure et peu de dégagement de chaleur et de consommation d'énergie.

Enfin, de tels types de cage contribuent également à un fonctionnement plus silencieux du roulement.

Ces cages sont réalisées en grande série par moulage par injection d'un matériau tel que du polyamide (PA), éventuellement chargé de fibres de verre afin d'améliorer ses propriétés mécaniques.

Les principaux paramètres limitant les possibilités d'utilisation dans un roulement de cages réalisées en matière synthétique sont la température de fonctionnement ainsi que le vieillissement dû aux attaques chimiques du lubrifiant.

C'est ainsi que pour une cage réalisée en polyamide 6.6 renforcée de fibres de verre, la température de fonctionnement est limitée à 120°C en utilisation continue.

On peut repousser cette limite en utilisant des cages réalisées en des matériaux plus performants tels que des résines polyphénylène sulfure (PPS) à structure réticulée, des résines polyéther sulfone (PES), polyéther imide (PEI) ou des résines polyéther éther-cétone (PEEK), mais ces matériaux présentent deux inconvénients majeurs :
- prix de revient élevé
- manque de flexibilité, rendant difficile le démoulage de la cage ainsi que le montage des éléments roulants dans les alvéoles (risque de rupture des languettes).

On pourrait également envisager un polymère du groupe des polyphtalamides (PPA), mais le PPA est un matériau de faible ductilité ne permettant donc pas d'obtenir une cage dont les languettes de retenue soient suffisamment flexibles pour assurer un démoulage facile de ladite cage et pour pouvoir monter les éléments roulants dans les alvéoles sans risquer la rupture de ces dernières.

L'invention se propose de résoudre l'ensemble de ces problèmes.

L'invention a pour objet de réaliser une cage pour hautes températures, résistante chimiquement aux lubrifiants, à languettes de retenue flexibles, et de coût faible.

Le procédé de fabrication, selon l'invention, est destiné à des cages du type destiné au maintien d'éléments roulants dans un roulement comprenant au moins une rangée d'éléments roulants disposés entre deux chemins de roulement. La dite cage comprend une partie annulaire pourvue d'alvéoles destinées à recevoir les éléments roulants, lesdits éléments roulants étant encliquetés dans les alvéoles et retenus dans ces dernières au moyen d'organes élastiquement déformables. La cage est obtenue par moulage d'un mélange d'un polymère du groupe des polyphtalamides et d'un élastomère.

De préférence, le dit polymère du groupe des polyphtalamides est obtenu par polycondensation d'hexaméthylènediamine, d'acide téréphtalique, d'acide isophtalique, et d'acide adipique.

Dans un mode de réalisation de l'invention, le dit mélange est chargé de fibres de verre, les fibres de verre étant incorporées au mélange avant moulage.

L'invention a également pour objet une cage pour des éléments roulants d'un roulement comprenant un polymère du groupe des polyphtalamides et un élastomère mélangés, et un palier à roulement équipé d'une telle cage.

De préférence, le point de fusion du matériau qui la compose est supérieur ou égal à 300°C.

Dans un mode de réalisation de l'invention, la température de transition vitreuse du matériau qui la compose est supérieur ou égal à 130°C.

Dans un mode de réalisation de l'invention, la limite de température d'utilisation continue est supérieure ou égale à 140°C lors d'une utilisation en contact avec un lubrifiant.

Dans un mode de réalisation de l'invention, la ductilité du matériau qui la compose est supérieure ou égale à 5%.

Dans un mode de réalisation de l'invention, la résistance à la flexion du matériau qui la compose est supérieure ou égale à 260 N/mm².

Dans un mode de réalisation de l'invention, la résistance à l'impact du matériau qui la compose est supérieure ou égale à 50 kJ/m².

Les éléments roulants sont des billes ou des rouleaux.

Le matériau obtenu suivant l'invention est à structure semi-cristalline et présente de bonnes caractéristiques de :
- température limite compatible avec la résistance chimique aux divers lubrifiants utilisés dans le roulement,
- ductilité,
- flexibilité,
- tenue à la fatigue,
- tenue aux chocs,
- stabilité dimensionnelle.

La présente invention sera mieux comprise à l'étude de la description d'un roulement et d'une cage, pris à titre d'exemples nullement limitatifs et illustrés par les dessins annexés, sur lesquels :
La figure 1 est une vue en coupe axiale d'un roulement à billes;
la figure 2 est une vue de face partielle d'une cage; et
la figure 3 est une vue en coupe selon III-III de la figure 1.

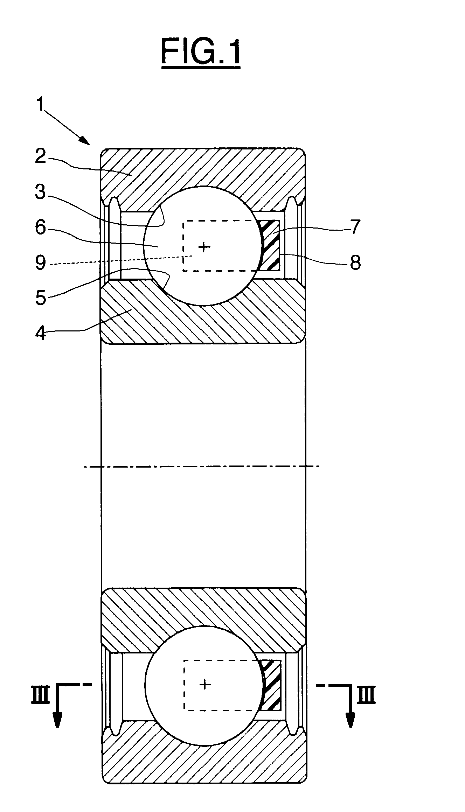

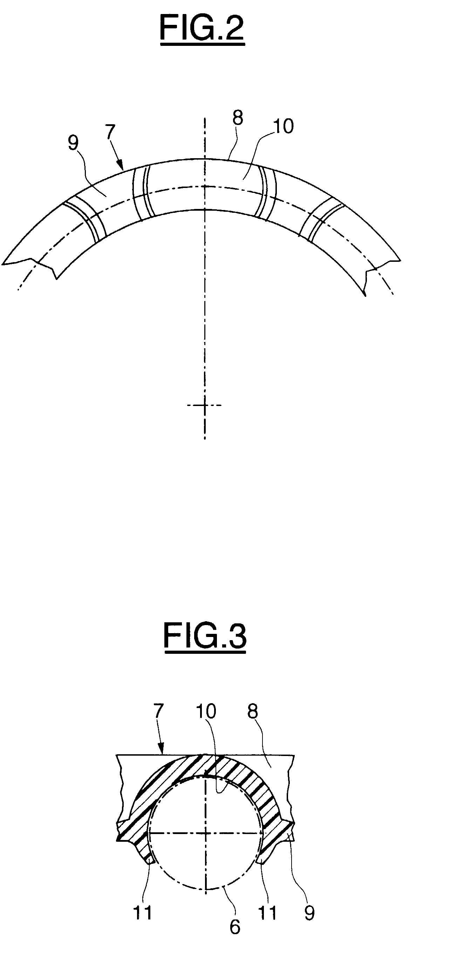

Comme on peut le voir sur les figures 1 à 3, le roulement 1 de type conventionnel dit "roulement rigide à une rangée de billes" comprend une bague extérieure 2 pourvue sur son alésage d'un chemin de roulement torique 3, une bague intérieure 4 pourvue sur sa surface extérieure d'un chemin de roulement torique 5, et une rangée d'éléments roulants 6, par exemple des billes, disposés entre le chemin de roulement 3 de la bague extérieure 2 et le chemin de roulement 5 de la bague intérieure 4.

La rangée d'éléments roulants 6 est maintenue par une cage 7 réalisée en matériau synthétique et comprenant une partie annulaire 8 disposée entre les bagues extérieure 2 et intérieure 4 sur un côté de la rangée d'éléments roulants 6, et des parties d'espacement 9 disposées entre lesdites bagues extérieure 2 et intérieure 4 et entre les éléments roulants 6. L'anneau 8 et les parties d'espacement 9 définissent une pluralité d'alvéoles sphériques 10 circonférentiellement régulièrement réparties et dans chacune desquelles est disposé un élément roulant 6. Les parties d'espacement 9 se terminent axialement à l'opposé de l'anneau 8 par des languettes 11 assurant le maintien de la cage 7 par rapport aux éléments roulants 6.

La cage 7 est réalisée, conformément à l'invention, par moulage d'un mélange d'un polymère du groupe des PPA et d'un élastomère.

Le PPA + élastomère, comme le PPA conventionnel, est caractérisé par un haut point de fusion (300-320°C).

Une cage en matériau synthétique subit des attaques chimiques de la part du lubrifiant contenu dans le roulement, cette attaque provoquant un vieillissement du matériau avec dégradation de ses propriétés. Ce vieillissement est d'autant plus rapide que la température de fonctionnement est élevée.

On est amené, pour chaque type de lubrifiant (huile, graisse) à définir une température limite de fonctionnement en continu en deçà de laquelle on est sûr que le roulement pourra atteindre une durée de vie normale sans dégradation notoire des propriétés de la cage.

Compte tenu de la très bonne résistance chimique aux divers lubrifiants utilisés dans le roulement, une cage en PPA + élastomère autorise le fonctionnement du roulement à des températures de l'ordre de 140°C à 160°C en continu suivant le type de lubrifiant utilisé, avec des pointes possibles de températures de faible durée, de l'ordre de 230°C.

Ces performances sont largement supérieures à celles d'un polyamide 6.6 (A3HG5) couramment utilisé pour la fabrication des cages de roulement et dont la température maximum en continu est de l'ordre de 120°C.

Le tableau ci-dessous montre les résultats d'une étude comparative menée entre le PA 6.6 et un PPA + élastomère avec plusieurs types de lubrifiants (graisses et huiles).

| **Graisse ou huile (*)** | **T° max d'utilisation compatible avec la résistance chimique aux lubrifiants** | |
|---|---|---|
| | **Cage en Ultramid A3HG5** | **Cage PPA + élastomère** |
| LHT23 (Kyodo Yushi Multemp SRL) | 135°C | > 160°C |
| Shell Spirax EP 80 W (*) | 120°C | 150°C |
| Shell Donnax TA D-21774 ATF(*) | 130°C | > 160°C |

Compte tenu de la diversité des lubrifiants disponibles, la température d'utilisation d'une cage en PPA + élastomère compatible avec le vieillissement dû aux lubrifiants couramment utilisés est de 140°C minimum.

Grâce à l'addition d'un élastomère dans le polymère de base, la ductilité du PPA + élastomère mesuré suivant la norme ISO 527 est supérieure ou égale à 5%, ce qui satisfait pleinement les critères minimum requis pour l'utilisation dans une cage de roulement.

Cette ductilité permet :
- de pouvoir extraire facilement la cage du moule lors de la fabrication des cages sans risquer de rupture ou de déformation permanente des languettes de retenue bordant les alvéoles,
- de pouvoir monter les éléments roulants, tels que des billes, dans les alvéoles de cage en toute sécurité, sans risque de rupture des languettes de retenue.

En effet, lors de l'introduction des billes dans leurs alvéoles, les languettes de retenue se déforment de façon importante. Cette déformation engendre une forte concentration de contraintes à la base des languettes à l'intérieur des alvéoles.

Cette contrainte sera à l'origine de fissures ou micro-fissures si la ductilité du matériau est inférieure à 5%.

La plupart des polymères ayant une ductilité élevée présentent malheureusement une faible résistance aux attaques chimiques des lubrifiants.

Le mélange PPA + élastomère est un excellent compromis entre un bon comportement aux attaques chimiques des lubrifiants et une ductilité suffisante pour permettre le montage des éléments roulants dans les alvéoles.

La résistance à la flexion obtenue grâce au matériau suivant l'invention est supérieure ou égale à 260 N/mm².

La résistance à la fatigue dynamique du PPA + élastomère satisfait aux critères minimaux exigés pour une utilisation dans une cage de roulement (0,5% minimum d'amplitude de déformation d'une éprouvette standard pour 10⁸ cycles) et est sensiblement équivalente à celle d'un PA 6.6, compte tenu de la température de transition vitreuse qui est de l'ordre de 130°C pour un PPA + élastomère contre 75 °C pour un PA 6.6.

Rappelons que la température de transition vitreuse est la température à laquelle les régions amorphes d'un polymère semi-cristallin deviennent élastiques et par conséquent améliorent l'élasticité du matériau.

La résistance à l'impact de ce matériau est > 50 kJ/m² alors que les critères minimum requis pour une application de cage de roulement sont de l'ordre de 34 kJ/m².

Une cage suivant l'invention réalisée en PPA + élastomère présente en outre de très bonnes caractéristiques de stabilité dimensionnelles, ce qui est un paramètre important pour un bon fonctionnement du roulement, la cage ne risquant pas de venir frotter sur les bagues ou les alvéoles de cage ne risquant pas de se décentrer par rapport aux éléments roulants par suite de variations dimensionnelles.

Une cage en PPA suivant l'invention présente également un faible pouvoir d'absorption d'eau, ce qui évite des variations dimensionnelles causées par des variations d'hygrométrie.

Enfin, le PPA + élastomère offre un coût moindre que les résines du type PEEK, PPS, PES ou PEI.

Bien entendu, le matériau de base peut être chargé de fibres de verre afin d'améliorer encore, si nécessaire, ses propriétés mécaniques.

## Revendications

1. Procédé de fabrication de cage, du type destiné au maintien d'éléments roulants dans un roulement comprenant au moins une rangée d'éléments roulants disposés entre deux chemins de roulement, la dite cage comprenant une partie annulaire pourvue d'alvéoles destinées à recevoir les éléments roulants, lesdits éléments roulants étant encliquetés dans les alvéoles et retenus dans ces dernières au moyen d'organes élastiquement déformables, dans lequel la cage est obtenue par moulage d'un mélange d'un polymère du groupe des polyphtalamides et d'un élastomère.

2. Procédé selon la revendication 1, dans lequel le dit polymère du groupe des polyphtalamides est obtenu par polycondensation d'hexaméthylènediamine, d'acide téréphtalique, d'acide isophtalique, et d'acide adipique.

3. Procédé selon la revendication 1 ou 2, dans lequel le dit mélange est chargé de fibres de verre, les fibres de verre étant incorporées au mélange avant moulage.

4. Cage pour élément roulant, caractérisée par le fait qu'elle comprend un polymère du groupe des polyphtalamides et un élastomère mélangés.

5. Cage selon la revendication 4, caractérisée par le fait que le point de fusion du matériau qui la compose est supérieur ou égal à 300°C.

6. Cage selon l'une quelconque des revendications 4 ou 5, caractérisée par le fait que la température de transition vitreuse du matériau qui la compose est supérieure ou égale à 130°C.

7. Cage selon l'une quelconque des revendications 4 à 6, caractérisée par le fait que la limite de température d'utilisation continue est supérieure ou égale à 140°C lors d'une utilisation en contact avec un lubrifiant.

8. Cage selon l'une quelconque des revendications 4 à 7, caractérisée par le fait que la ductilité du matériau qui la compose est supérieure ou égale à 5%.

9. Cage selon l'une quelconque des revendications 4 à 8, caractérisée par le fait que la résistance à la flexion du matériau qui la compose est supérieure ou égale à 260 N/mm².

10. Cage selon l'une quelconque des revendications 4 à 9, caractérisée par le fait que la résistance à l'impact du matériau qui la compose est supérieure ou égale à 50 kJ/m².

11. Cage selon l'une quelconque des revendications 4 à 10, caractérisée par le fait que les éléments roulants sont des billes ou des rouleaux.

12. Palier à roulement comprenant une cage selon l'une quelconque des revendications 4 à 11.
